# EUROPEAN PATENT SPECIFICATION

(11) **EP 4 012 545 B1**
(45) Date of publication and mention of the grant of the patent: **19.03.2025**
(21) Application number: 19944182.5
(22) Date of filing: 28.11.2019
(51) Int. Cl.: G06F 9/455, G06F 3/06

(54) **VIRTUAL DISK MIGRATION METHOD, APPARATUS AND DEVICE, AND READABLE STORAGE MEDIUM**
VERFAHREN, VORRICHTUNG UND VORRICHTUNG ZUR MIGRATION VON VIRTUELLEN PLATTEN UND LESBARES SPEICHERMEDIUM
PROCÉDÉ, APPAREIL ET DISPOSITIF DE MIGRATION DE DISQUE VIRTUEL, ET SUPPORT DE STOCKAGE LISIBLE

(30) Priority: 05.09.2019 CN 201910838357
(43) Date of publication of application: 15.06.2022
(73) Proprietor: Inspur Electronic Information Industry Co., Ltd, Jinan, Shandong 250101 (CN)
(72) Inventor: FENG, Zhen, Jinan, Shandong 250101 (CN); YAN, Bingheng, Jinan, Shandong 250101 (CN); WANG, Lixiang, Jinan, Shandong 250101 (CN); YANG, Feng, Jinan, Shandong 250101 (CN)
(74) Representative: Groth & Co. KB
(86) International application number: PCT/CN2019/121572
(87) International publication number: WO 2021/042595

(56) References cited:
- CN-A- 101 609 419
- CN-A- 102 662 751
- CN-A- 103 500 146
- CN-A- 103 885 719
- CN-A- 104 932 986
- CN-A- 105 468 473
- US-A1- 2011 066 597
- US-A1- 2012 310 888
- US-A1- 2016 210 211

## Description

### Technical Field

The present application relates to the field of computer technologies, and in particular, to a virtual disk migration method, apparatus and device, and a readable storage medium.

### Background Art

In the prior art, a backup disk is generally disposed at a source end. The backup disk is used to back up data in a virtual disk corresponding to a virtual machine operating at the source end. When it is necessary to migrate the virtual machine at the source end to a destination end, all the data in the backup disk is directly migrated to the destination end, so as to complete the migration of the virtual disk corresponding to the virtual machine and implement the migration of the virtual machine accordingly. As can be seen, in such an existing migration method, all the data in the backup disk needs to be migrated to the destination end at once. In this case, the data migration amount is relatively large, resulting in an increased migration time and reduced migration efficiency of a virtual disk and a virtual machine. Document US20110066597A1 discloses methods for migrating persistent data, such as persistent data associated with virtual machines, between and across data stores. Document US20120310888A1 discloses a method for fast generation of a bitmap of a file system snapshot in a Virtual Environment.

Therefore, how to improve the migration efficiency of virtual disks is a problem to be resolved by a person skilled in the art.

### Summary of the Invention

In view of this, an objective of the of the present application is to provide a virtual disk migration method, apparatus and device, and a readable storage medium, thereby improving the migration efficiency of virtual disks. The present invention is defined as set out in the appended claims.

As described herein, the present application provides a virtual disk migration method, applied to a first data center, a source virtual disk corresponding to a virtual machine operating in the first data center being divided into a plurality of clusters, the method including: when a data change occurs in a cluster, updating the label of the cluster in a binary table to a first target value; copying data in the cluster to a second data center, and updating the first target value to a second target value; and if an instruction for migrating the virtual machine to the second data center is received, controlling the virtual machine to stop operating, querying the first target value in the binary table, and migrating data in the cluster corresponding to the queried first target value to the second data center.

As described herein, in the present invention, before the virtual machine is migrated to the second data center, data in the virtual disk is labeled by using the binary table to distinguish between updated data and unupdated data. The first target value is used for labeling that data is updated. The second target value is used for labeling that data is not updated or is updated but has been copied. In the present application, a part of data in a virtual disk corresponding to a virtual machine is copied in advance to a second data center on the basis of a binary table. In this case, when a virtual machine is migrated, only uncopied data in the virtual disk needs to be migrated, thereby reducing the data migration amount and migration time, and improving the migration efficiency of a virtual disk and a virtual machine. The part of data copied to the second data center in advance is updated data in the virtual disk. The data migrated during the migration of the virtual machine is data that remains unupdated in the virtual disk and/or data that is updated but has not been copied to the second data center.

Correspondingly, a virtual disk migration apparatus and device and a readable storage medium provided in the present application also have the foregoing technical effects.

### Brief Description of the Drawings

To describe the technical solutions in the embodiments of this application or the prior art more clearly, the following briefly introduces the accompanying drawings required for describing the embodiments or the prior art. Apparently, the accompanying drawings in the following description show merely embodiments of this application, and a person of ordinary skill in the art may still derive other drawings from the provided accompanying drawings without creative efforts.
Fig. 1 is a flowchart of a first virtual disk migration method according to the present application;
Fig. 2 is a flowchart of a second virtual disk migration method according to the present application;
Fig. 3 is a schematic diagram of a virtual disk migration system according to the present application;
Fig. 4 is a schematic diagram of a virtual disk migration apparatus according to the present application; and
Fig. 5 is a schematic diagram of a virtual disk migration device according to the present application.

### Detailed Description of the Embodiments

The following clearly and completely describes the technical solutions in embodiments of this application with reference to the accompanying drawings in embodiments of this application. Apparently, the described embodiments are some rather than all of the embodiments of the present application. All other embodiments obtained by persons of ordinary skill in the art on the basis of the embodiments of the present application without creative efforts shall fall within the protection scope of the present application.

At present, in an existing migration method, all data in a backup disk needs to be migrated to a destination end at once. In this case, the data migration amount is relatively large, resulting in an increased migration time and reduced migration efficiency of a virtual disk and a virtual machine. For this, the present application provides a virtual disk migration solution, so that the migration efficiency of virtual disks can be improved.

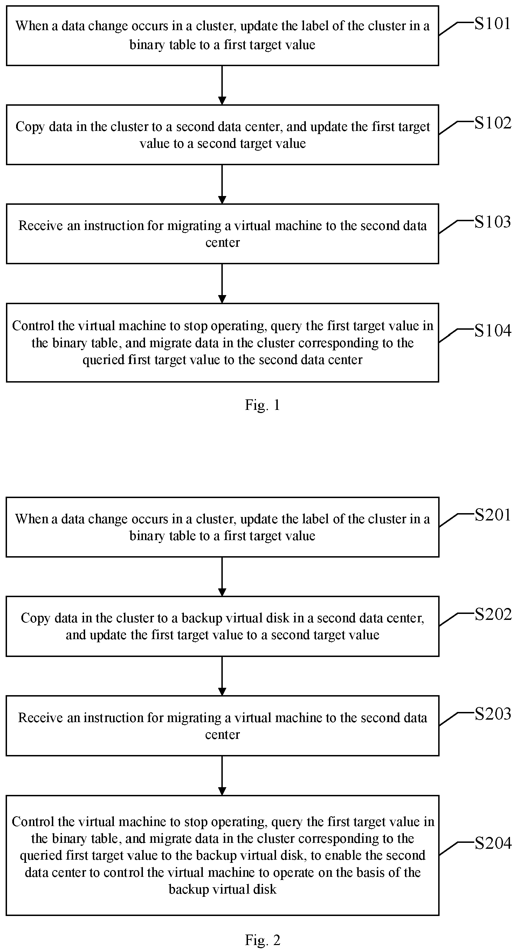

As shown in Fig. 1, embodiments of the present application provide a first virtual disk migration method. The method is applied to a first data center. A source virtual disk corresponding to a virtual machine operating in the first data center is divided into a plurality of clusters. The method includes the following steps.

S101: When a data change occurs in a cluster, update the label of the cluster in a binary table to a first target value.

Specifically, when data in a cluster in a virtual disk is changed, the label of the cluster in a binary table is updated to a first target value. The first target value is used for labeling updated data.

S102: Copy data in the cluster to a second data center, and update the first target value to a second target value.

Further, data in a cluster with the label of the first target value is copied to the second data center, that is, updated data is copied to the second data center, and at the same time the first target value is updated to the second target value, the second target value is used for labeling unupdated data and/or updated but copied data.

S103: Receive an instruction for migrating the virtual machine to the second data center.

S104: Control the virtual machine to stop operating, query the first target value in the binary table, and migrate data in the cluster corresponding to the queried first target value to the second data center.

When the instruction for migrating the virtual machine to the second data center is received, the binary table is searched for the first target value. In this case, the data in the cluster corresponding to the found first target value includes: unupdated data, updated but copied data, and data that is updated but has not been copied, that is, the other part of data that needs to be migrated. Therefore, this part of data is migrated to the second data center, and migration of all data in the virtual disk is completed.

In a specific implementation, an initialization step of the binary table includes: calculating a difference value between the backup virtual disk and the source virtual disk; and determining the difference value as an initial label of each cluster of the source virtual disk in the binary table.

Specifically, the backup virtual disk is also divided into a plurality of clusters. The clusters in the backup virtual disk correspond one to one to the clusters in the source virtual disk. Therefore, the difference between the backup virtual disk and the source virtual disk is corresponding differences between the clusters in the backup virtual disk and the clusters in the source virtual disk. When data stored in a cluster in the backup virtual disk is consistent with data stored in a corresponding cluster in the source virtual disk, the difference between the two clusters may be denoted as "0", or otherwise denoted as "1". "0" is the second target value, and "1" is the first target value. Therefore, the label of a cluster in the source virtual disk in the binary table is consistent with the label of a corresponding cluster in the backup virtual disk in the binary table.

It needs to be noted that a data copy period may be set. When a data copy time point is reached, data in a cluster with the label of the first target value is copied to the second data center. Data is copied in batches within a preset time period.

As can be seen, in this embodiment, before the virtual machine is migrated to the second data center, data in the virtual disk is labeled by using the binary table to distinguish between updated data and unupdated data. The first target value is used for labeling that data is updated. The second target value is used for labeling that data is not updated or is updated but has been copied. In the present application, a part of data in a virtual disk corresponding to a virtual machine is copied in advance to a second data center on the basis of a binary table. In this case, when a virtual machine is migrated, only uncopied data in the virtual disk needs to be migrated, thereby reducing the data migration amount and migration time, and improving the migration efficiency of a virtual disk and a virtual machine.

As shown in Fig. 2, embodiments of the present application provide a second virtual disk migration method. The method is applied to a first data center. A source virtual disk corresponding to a virtual machine operating in the first data center is divided into a plurality of clusters. A second data center is a disaster recovery center of the first data center. A disaster recovery virtual disk is disposed in the second data center, and is configured to perform disaster recovery on data in the source virtual disk. The method includes the following steps.

S201: When a data change occurs in a cluster, update the label of the cluster in a binary table to a first target value.

S202: Copy data in the cluster to a backup virtual disk in a second data center, and update the first target value to a second target value.

S203: Receive an instruction for migrating the virtual machine to the second data center.

S204: Control the virtual machine to stop operating, query the first target value in the binary table, and migrate data in the cluster corresponding to the queried first target value to the backup virtual disk, to enable the second data center to control the virtual machine to operate on the basis of the backup virtual disk.

In a specific implementation, before the controlling the virtual machine to operate on the basis of the backup virtual disk, the method further includes: migrating a memory resource of the virtual machine to the backup virtual disk. The backup virtual disk is a backup disk of the disaster recovery virtual disk.

The migrating data in the cluster corresponding to the queried first target value to the second data center includes: migrating data in the cluster corresponding to the queried first target value to the disaster recovery virtual disk. That is, when a virtual machine is migrated, remaining data that needs to be migrated is migrated to the disaster recovery virtual disk, and then data in the disaster recovery virtual disk is migrated to the backup virtual disk. In this way, the backup virtual disk stores all data in the source virtual disk. In this case, the backup virtual disk and the disaster recovery virtual disk store the same data. Therefore, during migration of data in the disaster recovery virtual disk to the backup virtual disk, only data that does not exist in the backup virtual disk needs to be migrated to the backup virtual disk. The data that does not exist in the backup virtual disk is remaining data that needs to be migrated during the migration of the virtual machine.

It needs to be noted that the implementation steps in this embodiment are the same as or similar to those in the foregoing embodiments, reference may be made to each other if necessary, and details are not described again in this embodiment.

As can be seen from above, in this embodiment, before the virtual machine is migrated to the second data center, data in the virtual disk is labeled by using the binary table to distinguish between updated data and unupdated data. The first target value is used for labeling that data is updated. The second target value is used for labeling that data is not updated or is updated but has been copied. In the present application, a part of data in a virtual disk corresponding to a virtual machine is copied in advance to a second data center on the basis of a binary table. In this case, when a virtual machine is migrated, only uncopied data in the virtual disk needs to be migrated, thereby reducing the data migration amount and migration time, and improving the migration efficiency of a virtual disk and a virtual machine.

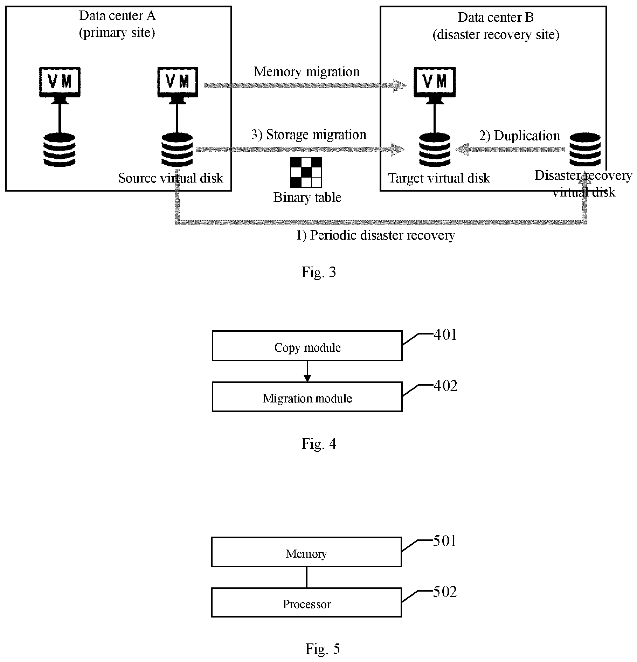

Referring to Fig. 3, embodiments of this application disclose a virtual disk migration system. The system includes a data center A (that is, a first data center) and a data center B (that is, a second data center). The data center A has a plurality of source virtual disks. Each source virtual disk is divided into a plurality of clusters.

The data center B is a disaster recovery center of the data center A. The data center B is provided with a disaster recovery virtual disk corresponding to the source virtual disk and is provided with a backup disk, that is, a target virtual disk of the disaster recovery virtual disk.

In Fig. 3, 1) periodic disaster recovery, 2) duplication, and 3) storage migration need to be performed. Refer to the following process for details.

Specifically, data in the source virtual disk may be duplicated to the disaster recovery virtual disk periodically at 24:00 every day to establish the backup disk, that is, the target virtual disk of the disaster recovery virtual disk. In this case, on the second day, the data center A maintains a binary table. If data in a cluster in a virtual disk in the data center A is changed, the cluster is labeled with 1 (that is, a first target value) in the binary table; or otherwise, the cluster is labeled with 0 (that is, a second target value) in the binary table. For a cluster labeled with 1, data in the cluster is copied to a backup virtual disk (that is, the target virtual disk in Fig. 3) of the data center B in time. After copying is completed, the cluster is labeled with 0.

If the data center A triggers a virtual machine migration procedure on the second day, the data center A controls a to-be-migrated virtual machine to stop operating, and searches the binary table for clusters labeled with 1, to further migrate data in the clusters labeled with 1 to the target virtual disk in the data center B. In this case, the target virtual disk stores all data in a source virtual disk corresponding to a current virtual machine. In this case, data in the disaster recovery virtual disk has been stored in the target virtual disk. Therefore, the data in the disaster recovery virtual disk may be cleared to wait till 24:00 on the second day to perform disaster recovery on data in another source virtual disk.

Further, the data center B migrates a memory resource of a virtual machine corresponding to a source virtual disk in time to complete migrate of the virtual machine.

It needs to be noted that the implementation steps in this embodiment are the same as or similar to those in the foregoing embodiments. Therefore, details are not described herein again in this embodiment. Reference may be made to each other if necessary, and details are not described again in this embodiment.

In this embodiment, during migration of a virtual disk, it is not necessary to perform full copy on the virtual disk, thereby reducing the migration time of a virtual machine and improving the migration efficiency of a virtual disk and a virtual machine.

A virtual disk migration apparatus provided in the embodiments of the present application is described below. For the virtual disk migration apparatus described below and the virtual disk migration method described above, reference may be made to each other.

As shown in Fig. 4, embodiments of the present application provide a virtual disk migration apparatus. The method is applied to a first data center. A source virtual disk corresponding to a virtual machine operating in the first data center is divided into a plurality of clusters. The apparatus includes:
a copy module 401, configured to: when a data change occurs in a cluster, update the label of the cluster in a binary table to a first target value; and copy data in the cluster to a second data center, and update the first target value to a second target value; and
a migration module 402, configured to: if an instruction for migrating the virtual machine to the second data center is received, control the virtual machine to stop operating, query the first target value in the binary table, and migrate data in the cluster corresponding to the queried first target value to the second data center.
In a specific implementation, the second data center is a disaster recovery center of the first data center; and if a corresponding backup virtual disk is disposed for a disaster recovery virtual disk in the second data center,
the copy module is specifically configured to:
   copy data in the cluster to the backup virtual disk, a disaster recovery virtual disk is disposed in the second data center, and is configured to perform disaster recovery on data in the source virtual disk; and
   correspondingly, the migration module is specifically configured to:
      migrate data in the cluster corresponding to the queried first target value to the backup virtual disk.

In a specific implementation, the second data center is specifically configured to migrate a memory resource of the virtual machine to the backup virtual disk, and control the virtual machine to operate on the basis of the backup virtual disk.

In a specific implementation, the migration module is specifically configured to:
migrate data in the cluster corresponding to the queried first target value to the disaster recovery virtual disk.

In a specific implementation, the virtual disk migration apparatus further includes a binary table initialization module, and the binary table initialization module includes:
a calculation unit, configured to calculate a difference value between the backup virtual disk and the source virtual disk; and
a determination unit, configured to determine the difference value as an initial label of each cluster of the source virtual disk in the binary table.

In a specific implementation, the copy module is specifically configured to:
if a data copy time point is reached, perform the step of copying data in the cluster to a second data center.

For a more specific working process of the modules and units in this embodiment, reference may be made to the corresponding content disclosed in the foregoing embodiments. Details are not described herein again.

As can be seen, this embodiment provides a virtual disk migration apparatus. The apparatus can reduce the data migration amount and migration time, and improve the migration efficiency of a virtual disk and a virtual machine.

A virtual disk migration device provided in the embodiments of the present application is described below. For the virtual disk migration device described below and the virtual disk migration method and apparatus described above, reference may be made to each other.

Referring to Fig. 5, an embodiment of the present application discloses a virtual disk migration device, including:
a memory 501, configured to store a computer program; and
a processor 502, configured to execute the computer program to implement the method disclosed in any foregoing embodiment.

A readable storage medium provided in the embodiments of the present application is described below. For the readable storage medium described below and the virtual disk migration method, apparatus and device described above, reference may be made to each other.

A readable storage medium is configured to store a computer program, the computer program being executed by a processor to implement the virtual disk migration method disclosed in the foregoing embodiments. For specific steps of the method, reference may be made to the corresponding content disclosed in the foregoing embodiments. Details are not described herein again.

"First", "second", "third", "fourth", and the like (if exist) involved in the present application are only used to distinguish between similar objects, but are not used to describe a specific order or time sequence. It should be understood that the data thus used are interchangeable in appropriate circumstances and that the embodiments described herein can be implemented in other sequences than the content illustrated or described. In addition, the terms "include", "include", and any variation of such terms in in the description and claims of the present application is intended to cover a non-exclusive inclusion. For example, a process, method or device that includes a series of steps or units not only includes those steps or units specified expressly, but also includes other steps or units that are not specified expressly or are inherent to the process, method or device.

It needs to be noted that in the present application, description of "first", "second", and the like are used only for description, but are not intended to indicate or imply relative importance or implicitly specify a quantity of indicated technical features. Therefore, the features limited by "first" and "second" may explicitly or implicitly include at least one such feature. In addition, the technical solutions between the various embodiments can be combined with each other on the basis of that a combination can be implemented by a person of ordinary skill in the art. When a combination of technical solutions encounters a contradiction or cannot be implemented, it should be considered that this combination of technical solutions does not exist and does not fall within the scope of protection that the present application seeks to protect.

All embodiments are described in the present invention by using the progressive method. Each embodiment describes only the difference from other embodiments. For the same or similar parts among all embodiments, reference may be made to the relevant parts.

Steps of methods or algorithms described in the embodiments disclosed in this specification may be directly implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of readable storage medium known in the art.

Although the principle and implementation manners of the present application are described by using specific examples in this specification, descriptions of the embodiments are merely intended to help understand the methods and core idea of the present application. In addition, for a person of ordinary skill in the art, according to the idea of the present application, changes may be made to the specific implementation and the scope of application. In summary, the content of this specification should not be construed as a limitation to the present invention, which is solely limited by the scope of the appended claims.

## Claims

1. A virtual machine migration method, applied to a first data center, a source virtual disk corresponding to a virtual machine operating in the first data center being divided into a plurality of clusters, the method comprising:
when a data change occurs in a cluster, updating the label of the cluster in a binary table to a first target value; copying data in the cluster to a second data center, and updating the first target value to a second target value, wherein the first target value is used for labeling that data is updated but has not been copied, and the second target value is used for labeling that data is not updated or is updated and copied; and
if an instruction for migrating the virtual machine to the second data center is received, controlling the virtual machine to stop operating, querying the first target value in the binary table, and migrating data in the cluster corresponding to the queried first target value to the second data center;
the second data center is a disaster recovery center of the first data center; and the copying data in the cluster to a second data center comprises: copying the data in the cluster to a backup virtual disk, wherein the backup virtual disk is a backup disk of a disaster recovery virtual disk, and wherein the disaster recovery virtual disk is disposed in the second data center and is configured to perform disaster recovery on data in the source virtual disk; and correspondingly, the migrating data in the cluster corresponding to the queried first target value to the second data center comprises: migrating data in the cluster corresponding to the queried first target value to the backup virtual disk;
after the migrating data in the cluster corresponding to the queried first target value to the backup virtual disk, the method further comprises controlling, by the second data center, the virtual machine to operate on the basis of the backup virtual disk;
before the controlling the virtual machine to operate on the basis of the backup virtual disk, the method further comprises migrating a memory resource of the virtual machine to the backup virtual disk;
an initialization step of the binary table comprises calculating a difference value between the backup virtual disk and the source virtual disk, wherein the difference value between the backup virtual disk and the source virtual disk is corresponding differences between the clusters in the backup virtual disk and the clusters in the source virtual disk; and determining the difference value as an initial label of each cluster of the source virtual disk in the binary table;
the copying data in the cluster to a second data center comprises if a data copy time point is reached, performing the step of copying data in the cluster to a second data center;
periodically copying data in the source virtual disk to the disaster recovery virtual disk and duplicating the data to the backup virtual disk.

2. The virtual machine migration method according to claim 1, wherein the migrating data in the cluster corresponding to the queried first target value to the second data center comprises:
migrating data in the cluster corresponding to the queried first target value to the disaster recovery virtual disk;
when the virtual machine is migrated, migrating remaining data that needs to be migrated to the disaster recovery virtual disk;
migrating the data in the disaster recovery virtual disk to the backup virtual disk so that the backup virtual disk stores all data in the source virtual disk and the backup virtual disk and the disaster recovery virtual disk store the same data.

3. A virtual machine migration device, comprising:
a memory, configured to store a computer program; and
a processor, configured to execute the computer program to implement the virtual machine migration method according to any one of claims 1 to 2.

4. A computer-readable storage medium, which stores a computer program, wherein the computer program being executed by a processor to implement the virtual machine migration method according to any one of claims 1 to 2.

## Patentansprüche

1. Verfahren zur Migration einer virtuellen Maschine, angewendet in einem ersten Rechenzentrum, wobei eine virtuelle Quellfestplatte, die einer im ersten Rechenzentrum betriebenen virtuellen Maschine entspricht, in eine Vielzahl von Clustern unterteilt ist, wobei das Verfahren umfasst:
wenn eine Datenänderung in einem Cluster auftritt, Aktualisieren des Labels des Clusters in einer Binärtabelle auf einen ersten Zielwert; Kopieren der Daten des Clusters in ein zweites Rechenzentrum und Aktualisieren des ersten Zielwerts auf einen zweiten Zielwert, wobei der erste Zielwert dazu dient, zu kennzeichnen, dass Daten aktualisiert, aber noch nicht kopiert wurden, und der zweite Zielwert dazu dient, zu kennzeichnen, dass Daten nicht aktualisiert wurden oder aktualisiert und kopiert wurden; und
falls eine Anweisung zur Migration der virtuellen Maschine in das zweite Rechenzentrum empfangen wird, Steuern der virtuellen Maschine zur Beendigung des Betriebs, Abfragen des ersten Zielwerts in der Binärtabelle und Migrieren der in den Clustern enthaltenen Daten, die dem abgefragten ersten Zielwert entsprechen, in das zweite Rechenzentrum;
das zweite Rechenzentrum ist ein Notfallwiederherstellungszentrum des ersten Rechenzentrums; und das Kopieren der Daten des Clusters in ein zweites Rechenzentrum umfasst: Kopieren der Daten des Clusters auf eine virtuelle Backup-Festplatte, wobei die virtuelle Backup-Festplatte eine Backup-Festplatte einer Notfallwiederherstellungsfestplatte ist, und wobei die Notfallwiederherstellungsfestplatte im zweiten Rechenzentrum angeordnet ist und zur Durchführung einer Notfallwiederherstellung der Daten der virtuellen Quellfestplatte konfiguriert ist; und entsprechend umfasst das Migrieren der in den Clustern enthaltenen Daten, die dem abgefragten ersten Zielwert entsprechen, in das zweite Rechenzentrum: Migrieren der in den Clustern enthaltenen Daten, die dem abgefragten ersten Zielwert entsprechen, auf die virtuelle Backup-Festplatte;
nach dem Migrieren der in den Clustern enthaltenen Daten, die dem abgefragten ersten Zielwert entsprechen, auf die virtuelle Backup-Festplatte, umfasst das Verfahren ferner das Steuern der virtuellen Maschine durch das zweite Rechenzentrum, sodass sie auf Basis der virtuelle Backup-Festplatte betrieben wird;
vor dem Steuern der virtuellen Maschine zum Betrieb auf Basis der virtuellen Backup-Festplatte, umfasst das Verfahren ferner das Migrieren einer Speicherressource der virtuellen Maschine auf die virtuelle Backup-Festplatte;
ein Initialisierungsschritt der Binärtabelle umfasst das Berechnen eines Differenzwerts zwischen der virtuellen Backup-Festplatte und der virtuellen Quellfestplatte, wobei der Differenzwert zwischen der virtuellen Backup-Festplatte und der virtuellen Quellfestplatte den entsprechenden Unterschieden zwischen den Clustern in der virtuellen Backup-Festplatte und den Clustern in der virtuellen Quellfestplatte entspricht; und das Bestimmen des Differenzwerts als Initialisierungslabel für jeden Cluster der virtuellen Quellfestplatte in der Binärtabelle;
das Kopieren der Daten des Clusters in ein zweites Rechenzentrum umfasst: falls ein Zeitpunkt für die Datenkopie erreicht ist, Durchführen des Schritts des Kopierens der Daten des Clusters in ein zweites Rechenzentrum;
periodisches Kopieren der Daten der virtuellen Quellfestplatte auf die Notfallwiederherstellungsfestplatte und Duplizieren der Daten auf die virtuelle Backup-Festplatte.

2. Verfahren zur Migration einer virtuellen Maschine nach Anspruch 1, wobei das Migrieren der in den Clustern enthaltenen Daten, die dem abgefragten ersten Zielwert entsprechen, in das zweite Rechenzentrum umfasst:
Migrieren der in den Clustern enthaltenen Daten, die dem abgefragten ersten Zielwert entsprechen, auf die Notfallwiederherstellungsfestplatte;
wenn die virtuelle Maschine migriert wird, Migrieren der verbleibenden Daten, die migriert werden müssen, auf die Notfallwiederherstellungsfestplatte;
Migrieren der Daten auf der Notfallwiederherstellungsfestplatte auf die virtuelle Backup-Festplatte, sodass die virtuelle Backup-Festplatte alle Daten der virtuellen Quellfestplatte speichert und die virtuelle Backup-Festplatte sowie die Notfallwiederherstellungsfestplatte dieselben Daten speichern.

3. Vorrichtung zur Migration einer virtuellen Maschine, umfassend:
einen Speicher, der dazu konfiguriert ist, ein Computerprogramm zu speichern; und
einen Prozessor, der dazu konfiguriert ist, das Computerprogramm auszuführen, um das Verfahren zur Migration einer virtuellen Maschine gemäß einem der Ansprüche 1 bis 2 zu implementieren.

4. Computerlesbares Speichermedium, das ein Computerprogramm speichert, wobei das Computerprogramm bei der Ausführung durch einen Prozessor dazu konfiguriert ist, das Verfahren zur Migration einer virtuellen Maschine gemäß einem der Ansprüche 1 bis 2 zu implementieren.

## Revendications

1. Procédé de migration de machine virtuelle, appliqué à un premier centre de données, un disque virtuel source correspondant à une machine virtuelle fonctionnant dans le premier centre de données étant divisé en une pluralité de clusters, le procédé comprenant :
lorsqu'un changement de données se produit dans un cluster, mettre à jour l'étiquette du cluster dans une table binaire vers une première valeur cible ; copier les données du cluster vers un second centre de données et mettre à jour la première valeur cible vers une seconde valeur cible, dans lequel la première valeur cible est utilisée pour indiquer que les données sont mises à jour mais n'ont pas été copiées, et la seconde valeur cible est utilisée pour indiquer que les données ne sont pas mises à jour ou sont mises à jour et copiées ; et
si une instruction de migration de la machine virtuelle vers le second centre de données est reçue, commander l'arrêt du fonctionnement de la machine virtuelle, interroger la première valeur cible dans la table binaire et migrer les données du cluster correspondant à la première valeur cible interrogée vers le deuxième centre de données ;
le second centre de données est un centre de reprise après sinistre du premier centre de données ; et la copie de données dans le cluster vers un second centre de données comprend : la copie des données dans le cluster vers un disque virtuel de sauvegarde, le disque virtuel de sauvegarde étant un disque de sauvegarde d'un disque virtuel de reprise après sinistre, et dans lequel le disque virtuel de reprise après sinistre est disposé dans le second centre de données et est configuré pour effectuer une reprise après sinistre sur des données dans le disque virtuel source ; et en conséquence, la migration de données dans le cluster correspondant à la première valeur cible interrogée vers le second centre de données comprend : la migration de données dans le cluster correspondant à la première valeur cible interrogée vers le disque virtuel de sauvegarde ; après la migration des données dans le cluster correspondant à la première valeur cible interrogée vers le disque virtuel de sauvegarde, le procédé comprend également le contrôle, par le second centre de données, de la machine virtuelle pour fonctionner sur la base du disque virtuel de sauvegarde ;
avant le contrôle de la machine virtuelle pour qu'elle fonctionne sur la base du disque virtuel de sauvegarde, le procédé comprend également la migration d'une ressource mémoire de la machine virtuelle vers le disque virtuel de sauvegarde ; une étape d'initialisation de la table binaire comprend le calcul d'une valeur de différence entre le disque virtuel de sauvegarde et le disque virtuel source, dans lequel la valeur de différence entre le disque virtuel de sauvegarde et le disque virtuel source correspond aux différences entre les clusters du disque virtuel de sauvegarde et les clusters du disque virtuel source ; et la détermination de la valeur de différence en tant qu'étiquette initiale de chaque cluster du disque virtuel source dans la table binaire ;
la copie des données du cluster vers un second centre de données comprend, si un point temporel de copie de données est atteint, l'exécution de l'étape de copie des données du cluster vers un second centre de données ;
la copie périodique des données du disque virtuel source vers le disque virtuel de reprise après sinistre et dupliquer les données sur le disque virtuel de sauvegarde.

2. Procédé de migration de machine virtuelle selon la revendication 1, dans lequel les données de migration dans le cluster correspondant à la première valeur cible interrogée vers le second centre de données comprennent :
la migration des données du cluster correspondant à la première valeur cible interrogée vers le disque virtuel de reprise après sinistre ;
lorsque la machine virtuelle est migrée, migration des données restantes qui doivent être migrées vers le disque virtuel de reprise après sinistre ;
la migration des données du disque virtuel de reprise après sinistre vers le disque virtuel de sauvegarde afin que le disque virtuel de sauvegarde stocke toutes les données du disque virtuel source et que le disque virtuel de sauvegarde et le disque virtuel de reprise après sinistre stockent les mêmes données.

3. Dispositif de migration de machine virtuelle, comprenant :
une mémoire, configurée pour stocker un programme informatique ; et
un processeur, configuré pour exécuter le programme informatique pour mettre en œuvre le procédé de migration de machine virtuelle selon l'une quelconque des revendications 1 à 2.

4. Support de stockage lisible par ordinateur, qui stocke un programme informatique, dans lequel le programme informatique étant exécuté par un processeur pour mettre en œuvre le procédé de migration de machine virtuelle selon l'une quelconque des revendications 1 à 2.
